Europäisches Patentamt

European Patent Office

Office européen des brevets

(11) Veröffentlichungsnummer: **0 546 324 B1**

(12) **EUROPÄISCHE PATENTSCHRIFT**

(45) Veröffentlichungstag der Patentschrift: **19.04.95**

(51) Int. Cl.⁶: **B01J 31/40**

(21) Anmeldenummer: **92119030.2**

(22) Anmeldetag: **06.11.92**

(54) **Verfahren zur Rückgewinnung von Edelmetallen.**

(30) Priorität: **19.11.91 DE 4137965**

(43) Veröffentlichungstag der Anmeldung:
**16.06.93 Patentblatt 93/24**

(45) Bekanntmachung des Hinweises auf die
Patenterteilung:
**19.04.95 Patentblatt 95/16**

(84) Benannte Vertragsstaaten:
**AT BE CH DE FR GB IT LI NL**

(56) Entgegenhaltungen:
**EP-A- 0 103 845
US-A- 4 329 521
US-A- 4 341 741
US-A- 4 434 240**

(73) Patentinhaber: **BAYER AG**

**D-51368 Leverkusen (DE)**

(72) Erfinder: **Landscheidt, Heinz, Dr.
Liliencronstrasse 6
W-4100 Duisburg (DE)**
Erfinder: **Klausener, Alexander, Dr.
Weissendornweg 37
W-5190 Stolberg (DE)**
Erfinder: **Blank, Heinz Ulrich, Dr.
Am Geusfelde 35
W-5068 Odenthal (DE)**

## Beschreibung

Die vorliegende Erfindung betrifft ein Verfahren zur Rückgewinnung von Edelmetallen, insbesondere Palladium, aus Lösungen, die Verbindungen dieser Metalle enthalten, durch Reduktion dieser Verbindungen. Das Edelmetall kann als solches gewonnen werden oder anschließend in einem Wasser-Säure-Gemisch mit einem Oxidationsmittel zu einem Salz dieser Säure umgesetzt werden.

Verbindungen von Edelmetallen werden häufig zur homogenen Katalyse von Reaktionen der organischen Chemie eingesetzt. Im allgemeinen handelt es sich bei den in dieser Weise katalysierten Reaktionen um Oxidationsreaktionen.

So ist es aus EP 55 108 bekannt, daß Olefine in Gegenwart von Verbindungen der Platinmetalle mit Alkylnitriten in Acetale übergeführt werden können. In bevorzugter Weise kommen bei dieser Reaktion, die eine Variante der Wacker-Oxidation darstellt, Salze des zweiwertigen Palladiums zum Einsatz.

Hierbei fällt nach der Aufarbeitung ein edelmetallhaltiger Rückstand, beispielsweise als Destillationsrückstand, an, der nicht oder nur beschränkt erneut als Katalysator eingesetzt werden kann. Bei der erneuten Verwendung als Katalysator ist häufig bereits bei der ersten Wiederholung die katalytische Aktivität deutlich niedriger und sinkt bei der zweiten Wiederholung meistens auf Werte ab, die für eine technische Durchführung uninteressant sind. Damit stellt sich das Problem der Wiedergewinnung der wertvollen Metalle in metallischer Form oder, sofern dies möglich ist, in Form von Salzen, die bereits wiederum katalytische Aktivität zeigen.

Die erwähnte EP 55 108 erwähnt das Problem der Wiederverwendung der gebrauchten Katalysatorlösung oder ihrer Aufarbeitung nicht. Bei der Nacharbeitung des darin beschriebenen Verfahrens zeigte sich jedoch deutlich die oben erwähnte nachlassende katalytische Aktivität, die eine Aufarbeitung erforderlich macht.

Die GB 2.205.765 beschreibt eine Wiedergewinnung von Palladium durch Reduktion des gesamten Reaktionsansatzes mit Wasserstoff unter drastischen Bedingungen, beispielsweise während 4 Stunden bei 30 bar und 220 °C, wobei metallisches Palladium entsteht, das abfiltriert und der Wiederverwendung zugeführt werden kann. Die hohen Drücke und Temperaturen sowie die Bereitstellung spezieller Apparaturen stellen einen bedeutenden Aufwand dar. Ferner ist ein solches Verfahren nicht generell anwendbar, da sichergestellt sein muß, daß das noch im Reaktionsgemisch vorhandene Reaktionsprodukt diesen Bedingungen, insbesondere der Reduktion, stand hält. In der in der genannten GB 2.205.765 zitierten JP 53/20 009 (1978) wird die Reduktion des nach beendeter Aufarbeitung anfallenden Edelmetallrückstandes mit Hilfe von Natriumborhydrid oder Natriumformiat bei Raumtemperatur oder bei einer Temperatur bis zu 70 °C beschrieben. Die Partikelgröße des dabei erhaltenen Edelmetalls in metallischer Form variiert jedoch in weiten Grenzen, so daß bei der Gewinnung des Edelmetalls durch Filtration erhebliche Verluste durch Nichterfassung feinster Metallteilchen eintreten. Ein solches Verfahren bedeutet demnach immer noch einen erheblichen Kostenaufwand durch Edelmetallverluste. Auch das Rückgewinnungsverfahren in der ebenfalls in GB 2.205.765 erwähnten JP 60/59 974 (1985) durch Zusatz von Alkalicarbonaten oder -hydrogencarbonaten zur Reduktion ist offenbar nicht zufriedenstellend, da die genannte GB-Anmeldung schließlich den anderen oben beschriebenen Weg mit hohem technischen Aufwand vorschlägt.

Es bestand daher nach wie vor die Aufgabe, ein Verfahren zu finden, das eine einfache Aufbereitung von Edelmetallverbindungen enthaltenden Lösungen, die aus Oxidationsreaktionen unter Einsatz von Alkylnitriten stammen, bei hoher Wiedergewinnungsrate gestattet.

Es wurde nun gefunden, daß man reduziertes Edelmetall in geeigneter Partikelgröße und damit eine hohe Wiedergewinnung durch gute Filtrierbarkeit erhält, wenn man die Reduktion in Gegenwart eines Hilfsstoffes durchführt, der eine primäre oder sekundäre Aminogruppe, die mit salpetriger Säure reagieren kann, enthält oder bilden kann.

Die Erfindung betrifft demnach ein Verfahren zur Rückgewinnung von Edelmetallen in metallischer Form oder in Form ihrer Salze aus Lösungen oder Gemischen, die Verbindungen dieser Metalle enthalten und die aus Oxidationsreaktionen unter Einsatz von Alkylnitriten stammen, durch Behandlung mit Reduktionsmitteln, das dadurch gekennzeichnet ist, daß zur Behandlung mit dem Reduktionsmittel ein Hilfsstoff, der eine primäre oder sekundäre Aminogruppe, die mit salpetriger Säure reagieren kann, enthält oder unter den Reaktionsbedingungen bilden kann, in einer Gewichtsmenge zugesetzt wird, die das 0,001 bis 0,5-fache, bevorzugt das 0,01 bis 0,4-fache, besonders bevorzugt das 0,05 bis 0,3-fache der Lösung oder des Gemisches beträgt, daß bei einer Temperatur von 0 - 100 °C, bevorzugt von 20-90 °C, besonders bevorzugt von 40-80 °C, gearbeitet wird und daß das reduzierte Metall zur Gewinnung in metallischer Form vom Reaktionsgemisch der Reduktion abgetrennt wird, wonach das Metall in metallischer Form wiederverwendet werden kann oder zur Gewinnung in Form der Salze das abgetrennte Metall in einem Wasser-Säure-Gemisch mit einem Oxidationsmittel bei einer Temperatur von 20-100 °C, bevorzugt von 30-100 °C, besonders bevorzugt von 40-100 °C, umgesetzt werden kann.

Das erfindungsgemäße Verfahren ergibt Edelmetallpartikel mit außerordentlich guter Filtrierbarkeit, wodurch das Edelmetall praktisch vollständig abgetrennt und wiedergewonnen werden kann. Das so wiedergewonnene Palladium zeigt beim Einsatz in metallischer Form vollständige Aktivität, läßt sich aber in Erweiterung des erfindungsgemäßen Verfahrens auch in einfacher Form durch Oxidation mit einem Wasser-Säure-Gemisch in eine Edelmetallverbindung von hoher katalytischer Aktivität überführen. Dieser Vorgang des Einsatzes von Edelmetallverbindungen als homogene Katalysatoren, Rückgewinnung des Edelmetalls und erneute Bildung von katalytisch wirksamen Edelmetallverbindungen läßt sich beliebig oft wiederholen.

Edelmetalle, die dem erfindungsgemäßen Verfahren unterworfen werden können, sind Silber, Gold und die Platinmetalle Ruthenium, Rhodium, Palladium, Osmium, Iridium und Platin, in bevorzugter Weise die genannten Platinmetalle, in besonders bevorzugter Weise die leichten Platinmetalle Ruthenium, Rhodium und Palladium und in ganz besonders bevorzugter Weise das Palladium.

Lösungen oder Gemische, die Verbindungen solcher Edelmetalle enthalten, sind die Reaktionsgemische, die bei einer homogen katalysierten Oxidationsreaktion unter Einsatz von Alkylnitriten erhalten werden, oder Lösungen oder Gemische, die bei der Aufarbeitung solcher Reaktionsgemische, beispielsweise in Form von Destillationsrückständen, verbleiben. In bevorzugter Weise wird mit solchen Aufarbeitungsrückständen gearbeitet.

Das erfindungsgemäße Verfahren ist vor allem dadurch gekennzeichnet, daß zur Behandlung der genannten Lösungen oder Gemische mit einem Reduktionsmittel, ein Hilfsstoff zugesetzt wird. Geeignete Hilfsstoffe sind solche, die eine primäre oder sekundäre Aminogruppe, die mit salpetriger Säure reagieren kann, enthalten oder bilden können. Beispiele für solche Hilfsstoffe sind Ammoniak, primäre oder sekundäre aliphatische Amine mit 1-20, bevorzugt 1-12 C-Atomen in den Kohlenwasserstoffresten sowie primäre und sekundäre aromatische Amine mit 6-10 C-Atomen in den Kohlenwasserstoffresten und deren Salze, wie die Halogenide, Sulfate, Nitrate, Carbonate und $C_1$-$C_{12}$-Alkylcarboxylate; Säuramide, die am N-Atom nicht oder nur einfach durch $C_1$-$C_4$-Alkyl substituiert sind, von organischen und anorganischen Säuren, wie Harnstoff, Amidosulfonsäure, Sulfamid, Formamid, Acetamid, Propionamid, N-Methyl- und N,N'-Dimethylharnstoff, N-Methyl- und N-Ethyl-acetamid, Benzamid und weitere analoge Amide; Abkömmlinge des Harnstoffs, wie Semicarbazid und Guanidin sowie ihre an den N-Atomen jeweils nur einfach durch $C_1$-$C_4$-Alkyl substituierte Derivate und ihre Salze; Cyanamid, Dicyanamid, Aminoguanidin, Biguanid; Aminosäuren der aliphatischen Reihe mit 1-12 C-Atomen, wie Glycin, Alanin, Valin, Leucin, ferner $\beta$- und $\gamma$- und weitere zu den $\alpha$-Aminosäuren isomere Aminosäuren.

Bevorzugte Hilfsstoffe sind Ammoniak, primäre oder sekundäre aliphatische Amine, primäre oder sekundäre aromatische Amine, deren Salze, Amide von organischen oder anorganischen Säuren.

Besonders bevorzugte Hilfsstoffe sind Ammoniumchlorid, Methylammoniumchlorid, Harnstoff, Amidosulfonsäure.

Die genannten Hilfsstoffe, insbesondere die bevorzugten, zeichnen sich durch Wohlfeilheit und einfache Handhabung auf.

Zur Durchführung der Reduktion wird den Lösungen oder Gemischen, bevorzugt den Destillationsrückständen, Wasser oder ein Gemisch aus Wasser und einem mit Wasser mischbaren organischen Lösungsmittel in einer Gewichtsmenge zugesetzt, die das 1 - 100-fache, bevorzugt das 5 - 50-fache, besonders bevorzugt das 10 - 20-fache der Lösung oder des Gemisches bzw. des Destillationsrückstandes beträgt. Für den Fall der Mitverwendung eines mit Wasser mischbaren organischen Lösungsmittels beträgt dessen Menge innerhalb des Gesamtgemisches das 1 - 10-fache, bevorzugt das 2 - 5-fache, besonders bevorzugt das 2,5 - 3,5-fache des Gewichtes der Lösung oder des Gemisches bzw. des Destillationsrückstandes. Geeignete mit Wasser mischbare organische Lösungsmittel sind Alkohole, wie Methanol, Ethanol, Propanol, Isopropanol, Butanol, sec.-Butanol, Ethylenglykol, Glycerin, Ether wie Tetrahydrofuran und Dioxan, Dimethylformamid, Diethylformamid und die entsprechenden Acetamide, Dimethylsulfoxid und andere dem Fachmann bekannte mit Wasser mischbare Lösungsmittel, die sich bei der Reduktion inert verhalten. Bevorzugte organische Lösungsmittel sind Methanol, Ethanol, Ethylenglykol, Tetrahydrofuran und Dioxan; besonders bevorzugt sind Methanol und Ethanol.

Das erfindungsgemäße Verfahren ist mit allen dem Fachmann bekannten Reduktionsmitteln für Edelmetallsalze durchführbar. In bevorzugter Weise seien Wasserstoff, Kohlenmonoxid und komplexe Hydride genannt. Besonders bevorzugt werden komplexe Hydride wie Boranate oder Alanate, besonders bevorzugt Boranate (Borhydride von Metallen) der I. und II. Gruppe des Periodensystems der Elemente. Hiervon seien ganz besonders bevorzugt Natrium-, Kalium-, Lithium- und Zink-Borhydrid genannt. Unter diesen sei aus Gründen der allgemeinen Verfügbarkeit, des niedrigen Preises und der günstigen Aufarbeitung das Natrium-Borhydrid hevorgehoben. Das Reduktionsmittel wird in einer äquivalenten Menge eingesetzt, die das 0,5- bis 10-fache, bevorzugt das 1- bis 8-fache, besonders bevorzugt das 2- bis 6-fache der vorliegenden Äquivalente des Metalles beträgt.

Die Temperatur bei der Reduktion liegt im Bereich von 0 - 100°C, bevorzugt 20 - 90°C, besonders bevorzugt 40 - 80°C. Der Druck hat auf die Reduktion keinen signifikanten Einfluß, sodaß sowohl bei normalen als auch bei vermindertem oder erhöhtem Druck gearbeitet werden kann. Ein erhöhter Druck kommt beispielsweise in Frage, wenn mit gasförmigen Reduktionsmitteln, wie mit Wasserstoff oder Kohlenmonoxid, gearbeitet wird. In diesem Falle beträgt der Druck beispielsweise 2 bis 20 bar. Beim bevorzugten Arbeiten mit den komplexen Hydriden wird aus Gründen der Vereinfachung unter Normaldruck gearbeitet.

Die Isolierung des durch Reduktion ausgefällten Edelmetalls, erfolgt durch Absaugen oder Abzentrifugieren in an sich bekannter Weise. Das gewonnene Edelmetall kann in bekannter Weise gewaschen und getrocknet werden.

Das so wiedergewonnene Edelmetall ist bereits als Katalysator einsetzbar, sofern beispielsweise für Hydrierungen ein Edelmetall in metallischer Form benötigt wird.

Man kann jedoch in einer erweiterten Variante des erfindungsgemäßen Verfahrens das durch Reduktion gewonnene Edelmetall durch Oxidation in einem Wasser-Säure-Gemisch auch in Form der Salze solcher Edelmetalle wiedergewinnen, die sich ohne weitere Behandlung als homogene Katalysatoren, beispielsweise in einem der oben genannten Verfahren, einsetzen lassen.

In einem solchen Wasser-Säure-Gemisch wird das Wasser in einer Gewichtsmenge eingesetzt, die das 1- bis 10-fache, bevorzugt das 2- bis 8-fache, besonders bevorzugt das 4- bis 6-fache des abgetrennten Metalls beträgt. Die Säure wird in einer Äquivalentmenge eingesetzt, die das 1- bis 10-fache, bevorzugt das 2- bis 5-fache des abgetrennten Metalles beträgt. Als Säuren kommen sowohl anorganische als auch organische Säuren in Frage. Anorganische Säuren sind beispielsweise Salzsäure, Bromwasserstoffsäure, Iodwasserstoffsäure, Schwefelsäure, Salpetersäure; organische Säuren sind bespielsweise $C_1$-$C_6$-Carbonsäuren und gegebenenfalls substituierte Benzol- oder Toluolsulfonsäure. In bevorzugter Weise wird Essigsäure oder eine der genannten anorganischen Säuren, in besonders bevorzugter Weise Salzsäure eingesetzt.

Als Oxidationsmittel kommen alle in Frage, die unter den Bedingungen des erfindungsgemäßen Verfahrens ein ausreichend hohes Oxidationspotential besitzen. In bevorzugter Weise seien Chlorate oder Nitrate der Alkalimetalle, der Erdakalimetalle oder des Ammoniums, Salpetersäure und Wasserstoffperoxid genannt. Wegen der einfachen Handhabbarkeit wird das Wasserstoffperoxid bevorzugt.

Es ist bekannt, daß Salze der Edelmetalle zur homogenen Katalyse vielfach in Form von Komplexsalzen eingesetzt werden. In einer vorteilhaften Variante des erfindungsgemäßen Verfahrens ist es möglich, solche Komplexsalze simultan zur Durchführung der Oxidation zu bilden, wenn ein Alkali-, Erdalkali- oder Ammoniumsalz der zur Komplexbildung gewünschten Art mitverwendet wird In bevorzugter Weise handelt es sich hierbei um Alkali-, Erdkali- oder Ammoniumhalogenide, besonders bevorzugt um Alkali-oder Ammoniumhalogenide, ganz besonders bevorzugt um Natriumchlorid oder Lithiumchlorid. Diese zugesetzten, Komplexe bildenden Salze werden in einer zur Komplexbildung ausreichenden Menge eingesetzt, die durch einfache Berechnung ermittelt werden kann. Zur Oxidation wird bei einer Temperatur von 20 - 100°C, bevorzugt 30 - 100°C, besonders bevorzugt 40 - 100°C, gearbeitet. Die Oxidation ist ebenfalls unabhängig vom Druck, so daß aus Gründen der Vereinfachung unter Normaldruck gearbeitet wird.

Die Edelmetalle in Form ihrer Salze können nach erfolgter Oxidation in üblicher Weise, beispielsweise durch Einengen der Lösung und Kristallisation erhalten werden. Beispiele für Edelmetallverbindungen, die in katalytisch wirksamer Form erfindungsgemäß erhalten werden, sind $PdCl_2$, $Li_2[PdCl_4]$ oder $Na_2[PdCl_4]$.

Das erfindungsgemäße Verfahren und die Wiederverwendbarkeit der Edelmetalle in Form ihrer Salze bei der homogenen Katalyse werden am Beispiel der aus EP 55 108 bekannten Herstellung von Acetalen exemplifiziert. In diesem Verfahren werden Acetale aus Olefinen und Alkylnitriten in Gegenwart von Platinmetall-Verbindungen hergestellt. Das hergestellte Acetal wird im allgemeinen nach Durchführung der Reaktion destillativ abgetrennt. Der hierbei verbleibende Destillationsrückstand wird sodann erfindungsgemäß zur Rückgewinnung des Edelmetalls umgesetzt. Die folgenden Beispiele exemplifizieren somit das erfindungsgemäße Verfahren, ohne es auf diese spezielle Ausführungsform einzuschränken.

Experimentelle Beispiele

Beispiel 1

Nach dem aus EP 55.108 bekannten Verfahren wurden 1,5 Mol Acrylsäuremethylester mit Methylnitrit in Methanol als Reaktionsmedium und unter Verwendung von 1,0 g Palladiumchlorid als Katalysator oxidiert. Nach beendeter Umsetzung und Abtrennung des Lösungsmittels isolierte man das Reaktionsprodukt 3,3-Dimethoxy-propionsäuremethylester durch Destillation (Kp. 76°C/22 mbar). Der verbleibende Destillationsrückstand (3,8 g) wurde mit 50 ml Wasser, 10 ml Ethanol und 0,5 g Amidosulfonsäure versetzt und auf 60°C erhitzt. Innerhalb von 10 Minuten ließ man eine Lösung aus 0,5 g Natriumboranat in 10 ml 1 N Natronlauge zutropfen. Man ließ noch ca. 1 Stunde lang nachreagieren, saugte den ausgefallenen Niederschlag ab und wusch mit Wasser und Methanol. Die Analyse des Filtrates (100,3 g) ergab einen Palladiumgehalt von weniger als 2 mg/kg Lösung. Der Filterrückstand wurde mit 5 ml Wasser, 2,0 g 37 %iger Salzsäure und 0,5 g Lithiumchlorid versetzt und auf 60°C erhitzt. Bei dieser Temperatur ließ man 4 ml 30 %ige Wasserstoffperoxidlösung zutropfen und noch 30 Minuten lang nachreagieren. Die klare gelbbraune Lösung wurde unter vermindertem Druck eingeengt, und man erhielt 1,5 g katalytisch aktive Substanz.

## Beispiel 2

Nach dem aus EP 55.108 bekannten Verfahren wurden 1,5 Mol Acrylsäuremethylester mit Methylnitrit in Methanol als Reaktionsmedium und unter Verwendung der in Beispiel 1 wiedergewonnenen katalytisch aktiven Substanz oxidiert. Nach wie in Beispiel 1 erfolgter destillativer Aufarbeitung erhielt man 3,3-Dimethoxy-propionsäuremethylester in 87 %iger Ausbeute. Die Aufarbeitung des palladiumhaltigen Destillationsrückstandes erfolgte wie unter Beispiel 1 beschrieben. Man erhielt 1,5 g katalytisch aktive Substanz.

## Beispiel 3

Das Beispiel 2 wurde wiederholt und unter Verwendung der in Beispiel 2 wiedergewonnenen katalytisch aktiven Substanz oxidiert. Nach wie in Beispiel 1 erfolgter destillativer Aufarbeitung erhielt man 3,3-Dimethoxy-propionsäuremethylester wiederum in 87 %iger Ausbeute. Die Aufarbeitung des palladiumhaltigen Destillationsrückstandes erfolgte wie unter Beispiel 1 beschrieben. Man erhielt 1,5 g katalytische aktive Substanz.

## Vergleichsbeispiel 1 (einmal gebrauchter Katalysator)

Nach dem aus EP 55.108 bekannten Verfahren wurden 1,5 Mol Acrylsäuremethylester mit Methylnitrit in Methanol als Reaktionsmedium und unter Verwendung des in Beispiel 1 angefallenen Destillationsrückstandes als Katalysator oxidiert. Nach wie in Beispiel 1 erfolgter destillativer Aufarbeitung erhielt man 3,3-Dimethoxy-propionsäuremethylester in 75 %iger Ausbeute.

## Vergleichsbeispiel 2 (zweimal gebrauchter Katalysator)

Nach dem aus EP 55.108 bekannten Verfahren wurden 1,5 Mol Acrylsäuremethylester mit Methylnitrit in Methanol als Reaktionsmedium und unter Verwendung des in Vergleichsbeispiel 1 angefallenen Destillationsrückstandes als Katalysator oxidiert. Nach wie in Beispiel 1 erfolgter destillativer Aufarbeitung erhielt man 3,3-Dimethoxy-propionsäuremethylester in 35 %iger Ausbeute.

## Beispiel 4

Beispiel 1 wurde wiederholt, wobei dem Destillationsrückstand statt 0,5 g Amidosulfonsäure 0,28 g Ammoniumchlorid zugefügt wurde.

Die Analyse des Filtrats (108,1 g) ergab einen Palladiumgehalt von nur 3 mg/kg Lösung.

Der Filterrückstand wurde wie in Beispiel 1 aufgearbeitet. Man erhielt 1,5 g katalytisch aktive Substanz.

## Beispiel 5-9

Beispiel 1 wurde wiederholt, wobei dem Destillationsrückstand statt 0,5 g Amidosulfonsäure die in Tabelle 1 angegebenen Mengen des Zusatzstoffes zugefügt wurden.

Die dabei anfallenden Filterrückstände konnten problemlos wie in Beispiel 1 beschrieben in katalytisch aktive Substanz übergeführt werden.

**Tabelle 1**

| Beispiel | Zusatzstoff | Menge | Filtrat | Pd-Gehalt Filtrat | Menge Kat. aktive Substanz |
|---|---|---|---|---|---|
| 5 | Harnstoff | 0,31 g | 105,2 g | 6 mg/kg | 1,5 g |
| 6 | Guanidin-hydrochlorid | 0,49 g | 109,7 g | 2 mg/kg | 1,5 g |
| 7 | Methylamin-hydrochlorid | 0,35 g | 108,3 g | 5 mg/kg | 1,5 g |
| 8 | Glycin | 0,39 g | 104,9 g | 5 mg/kg | 1,5 g |
| 9 | Alanin | 0,46 g | 103,7 g | 3 mg/kg | 1,5 g |

**Patentansprüche**

1. Verfahren zur Rückgewinnung von Edelmetallen in metallischer Form oder in Form ihrer Salze aus Lösungen oder Gemischen, die Verbindungen dieser Metalle enthalten und die aus Oxidationsreaktionen unter Einsatz von Alkylnitriten stammen, durch Behandlung mit Reduktionsmitteln, dadurch gekennzeichnet, daß zur Behandlung mit dem Reduktionsmittel ein Hilfsstoff, der eine primäre oder sekundäre Aminogruppe, die mit salpetriger Säure reagieren kann, enthält oder unter den Reaktionsbedingungen bilden kann, in einer Gewichtsmenge zugesetzt wird, die das 0,001 - 0,5-fache, bevorzugt das 0,01 -0,4-fache, besonders bevorzugt das 0,05 - 0,3-fache der Lösung oder des Gemisches beträgt, daß bei einer Temperatur von 0-100°C, bevorzugt von 20-90°C, besonders bevorzugt von 40-80°C, gearbeitet wird und daß das reduzierte Metall zur Gewinnung in metallischer Form vom Reaktionsgemisch der Reduktion abgetrennt wird, wonach das Metall in metallischer Form wiederverwendet werden kann oder zur Gewinnung in Form der Salze das abgetrennte Metall in einem Wasser-Säure-Gemisch mit einem Oxidationsmittel bei einer Temperatur von 20-100°C, bevorzugt 30-100°C, besonders bevorzugt 40-100°C, umgesetzt werden kann.

2. Verfahren nach Anspruch 1, dadurch gekennzeichnet, daß das Edelmetall eines aus der Platinmetallgruppe, bevorzugt eines aus der Gruppe der Leichtplatinmetalle, besonders bevorzugt Palladium ist.

3. Verfahren nach Anspruch 1, dadurch gekennzeichnet, daß der Hilfsstoff Ammoniak bzw. ein Ammoniumsalz, ein primäres oder sekundäres aliphatisches Amin bzw. dessen Salz, ein primäres oder sekundäres aromatisches Amin bzw. dessen Salz oder ein Amid einer anorganischen oder organischen Säure, bevorzugt Ammoniumchlorid, Methylammoniumchlorid, Harnstoff oder Amidosulfonsäure ist.

4. Verfahren nach Anspruch 1, dadurch gekennzeichnet, daß die Lösungen oder Gemische der Metallverbindungen Destillationsrückstände sind.

5. Verfahren nach Anspruch 1, dadurch gekennzeichnet, daß den Lösungen oder Gemischen, bevorzugt den Destillationsrückständen, Wasser oder ein Gemisch aus Wasser und einem mit Wasser mischbaren organischen Lösungsmittel in einer Gewichtsmenge zugesetzt wird, die das 1 - 100-fache, bevorzugt das 5 - 50-fache, besonders bevorzugt das 10 - 20-fache der Lösungen oder Gemische bzw. des Destillationsrückstandes beträgt, wobei im Falle eines Gemisches die Gewichtsmenge des organischen Lösungsmittels innerhalb des Gemisches das 1 - 10-fache, bevorzugt das 2 - 5-fache, besonders bevorzugt das 2,5 - 3,5-fache, der Lösungen oder Gemische bzw. des Destillationsrückstandes beträgt.

6. Verfahren nach Anspruch 1, dadurch gekennzeichnet, daß das Reduktionsmittel Wasserstoff, Kohlenmonoxid oder ein komplexes Hydrid, bevorzugt ein Borhydrid von Metallen der I. und II. Gruppe des Periodensystems der Elemente, besonders bevorzugt Natrium-, Kalium-, Lithium- oder Zink-Borhydrid, ganz besonders bevorzugt Natrium-Borhydrid ist, und in einer Äquivalentmenge eingesetzt wird, die das 0,5 - 10-fache, bevorzugt das 1 - 8-fache, besonders bevorzugt das 2 - 6-fache der vorliegenden Äquivalente des Metalles beträgt.

7. Verfahren nach Anspruch 1, dadurch gekennzeichnet, daß im Wasser-Säure-Gemisch das Wasser in einer Gewichtsmenge, die das 1 - 10-fache, bevorzugt das 2 - 8-fache, besonders bevorzugt das 4 - 6-fache des abgetrennten Metalles beträgt, und die Säure in einer Äquivalentmenge, die das 1 - 10-fache, besonders bevorzugt das 2 - 5-fache des abgetrennten Metalles beträgt, eingesetzt werden.

8. Verfahren nach Anspruch 1, dadurch gekennzeichnet, daß als Säure Salzsäure, Bromwasserstoffsäure, Jodwasserstoffsäure, eine $C_1$-$C_6$-Carbonsäure, Benzolsulfonsäure, Toluolsulfonsäure, Schwefelsäure oder Salpetersäure, bevorzugt Essigsäure oder eine der genannten anorganischen Säuren, besonders bevorzugt Salzsäure eingesetzt wird.

9. Verfahren nach Anspruch 1, dadurch gekennzeichnet, daß als Oxidationsmittel Chlorate oder Nitrate der Alkalimetalle, Erdalkalimetalle oder des Ammoniums, Salpetersäure oder Wasserstoffperoxid, bevorzugt Wasserstoffperoxid eingesetzt wird.

10. Verfahren nach Anspruch 1, dadurch gekennzeichnet, daß zur Gewinnung der Metalle in Form komplexer Salze Alkali-, Erdalkali- oder Ammoniumsalze, bevorzugt Alkali-, Erdalkali- oder Ammoniumhalogenide, besonders bevorzugt Alkali- oder Ammoniumhalogenide, ganz besonders bevorzugt Natriumchlorid oder Lithiumchlorid in zur Komplexbildung ausreichender Menge zugesetzt werden.

**Claims**

1. Process for the recovery of noble metals in metallic form or in the form of their salts, by treatment with reducing agents, from solutions or mixtures which contain compounds of these metals and originate from oxidation reactions using alkyl nitrites, characterized in that an auxiliary which contains or, under the reaction conditions, can form a primary or secondary amino group which can react with nitrous acid is added to the treatment with the reducing agent in an amount by weight which is 0.001 - 0.5 times, preferably 0.01 - 0.4 times, particularly preferably 0.05 - 0.3 times that of the solution or mixture, in that the treatment is carried out at a temperature of 0-100 °C, preferably 20-90 °C, particularly preferably 40-80 °C, and in that, to be obtained in the metallic form, the reduced metal is separated off from the reaction mixture of the reduction, after which the metal can be reused in the metallic form, or, to be obtained in the form of the salts, the metal separated off can be reacted with an oxidizing agent at a temperature of 20-100 °C, preferably 30-100 °C, particularly preferably 40-100 °C, in a water/acid mixture.

2. Process according to Claim 1, characterized in that the noble metal is one from the platinum metal group, preferably one from the group of light platinum metals, particularly preferably palladium.

3. Process according to Claim 1, characterized in that the auxiliary is ammonia or an ammonium salt, a primary or secondary aliphatic amine or salt thereof, a primary or secondary aromatic amine or salt thereof, or an amide of an inorganic or organic acid, preferably ammonium chloride, methylammonium chloride, urea or amidosulphonic acid.

4. Process according to Claim 1, characterized in that the solutions or mixtures of the metal compounds are distillation residues.

5. Process according to Claim 1, characterized in that water or a mixture of water and a water-miscible organic solvent is added to the solutions or mixtures, preferably the distillation residues, in an amount by weight which is 1 - 100 times, preferably 5 - 50 times, particularly preferably 10 - 20 times that of the solutions or mixtures or of the distillation residue, and in the case of a mixture, the amount by weight of the organic solvent within the mixture is 1 - 10 times, preferably 2 - 5 times, particularly preferably 2.5 - 3.5 times that of the solutions or mixtures or of the distillation residue.

6. Process according to Claim 1, characterized in that the reducing agent is hydrogen, carbon monoxide or a complex hydride, preferably a borohydride of metals of group I and II of the periodic table of the elements, particularly preferably sodium borohydride, potassium borohydride, lithium borohydride or zinc borohydride, especially preferably sodium borohydride, and is employed in an equivalent amount which is 0.5 - 10 times, preferably 1 - 8 times, particularly preferably 2 - 6 times the equivalents present of the metal.

7. Process according to Claim 1, characterized in that the water is employed in the water-acid mixture in an amount by weight which is 1 - 10 times, preferably 2 - 8 times, particularly preferably 4 - 6 times that of the metal separated off, and the acid is employed in an equivalent amount which is 1 - 10 times, particularly preferably 2 - 5 times that of the metal separated off.

8. Process according to Claim 1, characterized in that hydrochloric acid, hydrobromic acid, hydroiodic acid, a $C_1$-$C_6$-carboxylic acid, benzenesulphonic acid, toluenesulphonic acid, sulphuric acid or nitric acid, preferably acetic acid or one of the inorganic acids mentioned, particularly preferably hydrochloric acid, is employed as the acid.

9. Process according to Claim 1, characterized in that chlorates or nitrates of the alkali metals, alkaline earth metals or ammonium, nitric acid or hydrogen peroxide, preferably hydrogen peroxide, are employed as the oxidizing agent.

10. Process according to Claim 1, characterized in that in order to obtain the metals in the form of complex salts, alkali metal, alkaline earth metal or ammonium salts, preferably alkali metal, alkaline earth metal or ammonium halides, particularly preferably alkali metal or ammonium halides, especially preferably sodium chloride or lithium chloride, are added in an amount sufficient for complexing.

**Revendications**

1. Procédé pour la récupération de métaux précieux sous une forme métallique ou sous une forme de leurs sels à partir de solutions ou de mélanges qui contiennent des composés de ces métaux et qui proviennent de réactions d'oxydation en présence de nitrites d'alkyle, par traitement avec des agents de réduction, caractérisé en ce qu'on ajoute pour le traitement avec l'agent de réduction un produit auxiliaire qui contient ou peut former dans les conditions de réaction un groupe amino primaire ou secondaire qui peut réagir avec de l'acide nitreux, dans une quantité massique qui est égale à 0,001-0,5 fois, de préférence 0,01-0,4 fois, encore mieux 0,05-0,3 fois la solution ou le mélange, qu'on travaille à une température de 0-100°C, de préférence 20-90°C, encore mieux 40-80°C et que, pour une récupération sous une forme métallique, on sépare le métal réduit du mélange réactionnel de la réduction, après quoi on peut réutiliser le métal sous une forme métallique ou on peut pour une récupération sous une forme des sels transformer le métal séparé dans un mélange eau-acide avec un agent d'oxydation à une température de 20-100°C, de préférence 30-100°C, encore mieux 40-100°C.

2. Procédé selon la revendication 1, caractérisé en ce que le métal précieux est un métal du groupe du platine, de préférence un métal léger du groupe du platine, encore mieux le palladium.

3. Procédé selon la revendication 1, caractérisé en ce que le produit auxiliaire est l'ammoniaque ou un sel d'ammonium, une amine aliphatique primaire ou secondaire, respectivement un sel de celle-ci, une amine aromatique primaire ou secondaire, respectivement un sel de celle-ci, ou un amide d'un acide organique ou inorganique, de préférence le chlorure d'ammonium, le chlorure de méthylammonium, l'urée ou l'acide sulfamique.

4. Procédé selon la revendication 1, caractérisé en ce que les solutions ou mélanges des composés métalliques sont des résidus de distillation.

5. Procédé selon la revendication 1, caractérisé en ce qu'on ajoute aux solutions ou aux mélanges, de préférence aux résidus de distillation, de l'eau ou un mélange constitué d'eau et d'un solvant organique miscible à l'eau dans une quantité massique qui est égale à 1-100 fois, de préférence 5-50 fois, encore mieux 10-20 fois, les solutions ou les mélanges, respectivement le résidu de distillation, dans le cas d'un mélange la quantité massique du solvant organique à l'intérieur du mélange est égale à 1-10 fois, de préférence 2-5 fois, encore mieux 2,5-3,5 fois les solutions ou mélanges, respectivement le résidu de distillation.

6. Procédé selon la revendication 1, caractérisé en ce que l'agent de réduction est l'hydrogène, le monoxyde de carbone ou un hydrure complexe, de préférence un borohydrure de métaux des groupes I et II du système périodique des éléments, encore mieux le borohydrure de sodium, de potassium, de lithium ou de zinc, tout particulièrement le borohydrure de sodium, et est utilisé dans une quantité d'équivalent qui est égale à 0,5-10 fois, de préférence 1-8 fois, encore mieux 2-6 fois l'équivalent présent du métal.

7. Procédé selon la revendication 1, caractérisé en ce qu'on utilise dans le mélange eau-acide l'eau dans une quantité massique qui est égale à 1-10 fois, de préférence 2-8 fois, encore mieux 4-6 fois le métal séparé et l'acide dans une quantité d'équivalent qui est égale à 1-10 fois, de préférence 2-5 fois le métal séparé.

8. Procédé selon la revendication 1, caractérisé en ce qu'on utilise comme acide l'acide chlorhydrique, l'acide bromhydrique, l'acide iodhydrique, un acide carboxylique en $C_1$-$C_6$, l'acide benzènesulfonique, l'acide toluène-sulfonique, l'acide sulfurique ou l'acide nitrique, de préférence l'acide acétique ou un des acides inorganiques cités, encore mieux l'acide chlorhydrique.

9. Procédé selon la revendication 1, caractérisé en ce qu'on ajoute comme agent d'oxydation des chlorates ou des nitrates des métaux alcalins, des métaux alcalino-terreux ou de l'ammonium, l'acide nitrique ou le peroxyde d'hydrogène, de préférence le peroxyde d'hydrogène.

10. Procédé selon la revendication 1, caractérisé en ce qu'on utilise pour la récupération des métaux sous une forme de sels complexes des sels d'alcalis, de bases alcalino-terreuses ou d'ammonium, de préférence des halogénures d'alcalis, de bases alcalino-terreuses ou d'ammonium, encore mieux des halogénures d'alcali ou d'ammonium, tout particulièrement du chlorure de sodium ou de chlorure de lithium dans une quantité suffisante pour la complexation.